# EUROPEAN PATENT APPLICATION

(11) **EP 3 192 735 A1**
(43) Date of publication of application: **19.07.2017**
(21) Application number: 17151242.9
(22) Date of filing: 12.01.2017
(51) Int. Cl.: B63H 23/24, B63H 21/17, B63H 23/12, F16D 3/76, F16D 3/78, B60L 11/00, B63H 21/30, F16D 3/62

(54) **HYBRID ENGINE SYSTEM**

(30) Priority: 12.01.2016 NO 20160058; 06.09.2016 NO 20161413
(71) Applicant: Mancraft AS, 5868 Bergen (NO)
(72) Inventor: Alvern, Øyvind, 5259 Hjellestad (NO)
(74) Representative: Acapo AS

(57) **Abstract**

There is disclosed a hybrid propulsion system for a marine vessel, comprising in sequence a propulsion combustion engine (1), an electromotor (6) a following transmission unit (12) and an exit shaft (13) for a drive purpose, and where said electromotor (6) is connected to a chargeable accumulator unit (7), the described propulsion system comprises a shaft (5), which between the propulsion combustion engine (1) and the electromotor (6) and between the electromotor (6) and a transmission unit (12), is divided in several shaft parts (5B,5D) interconnected via one or more joint units (4), and that it is able to absorb vibrations, and individual axial and transverse movements of the individual shaft parts (5B-5D) in the main shaft (5). The hybrid propulsion system is characterized in that the exit shaft part (5A) from the propulsion combustion engine (1), passes through a clutch unit (3) operating in a ratio of approximately 1:1, there are at least one rotatable elastic joint units (4) interconnected to the shaft parts (5B,5D) between said propulsion combustion engine (1) and electromotor (6) and the electromotor and the transmission (12) respectively; and where each of said at least one elastic joint unit (4) comprises universal mutually opposite joint flange structures which are mutually connected by a number of pivotable link arms (20) each extending from a first flange structure (41) to the other flange structure (51) and is anchored in a pivotable manner to said respective flange structures to absorb vibrations in the hybrid propulsion system.

A method and uses of the invention are also disclosed.

## Description

### The Field of the Invention

The present invention relates to a hybrid motor system including a combination of a propulsion combustion engine and an electro motor operative driving a common shaft, as appearing in the following claim 1.

There is also disclosed an isolating fixture for the mounting of the electromotor for providing vibration and electrical insulation, i.a. to prevent sparkovers and dampen vibrations that the electro motor may be exposed to.

The present invention also relates to a method for starting an exit shaft of a vessel from rest by an electromotor by operating a hybrid propulsion system comprised of, in sequence a propulsion combustion engine, an electromotor a following transmission unit and an exit shaft for a drive purpose, the described propulsion system comprises a common shaft, which is found between the propulsion combustion engine and the electromotor and between the electromotor and a transmission unit, is divided in several shaft parts interconnected via one or more joint units and that it is able to absorb vibrations, and individual axial and transverse movements of the individual shaft parts in the main shaft.

Further the invention relates to different applications (uses) and operation of the hybrid motor system.

### Background of the invention.

Presently there is an aim to reduce emissions of NOx, CO2 and other harmful emissions, as well as noise from combustion engines. Thus there is in general a great potential for hybrid propulsion systems, in this meaning systems able to combine different kinds of engines for propulsion. More specifically a combination of a conventional propulsion combustion (diesel) engine and an electric motor, are both operating a common drive shaft is an example of hybrid propulsion system. Hybrid propulsion systems are relevant for propulsion of both vessels (ships) and vehicles (cars). The present invention is in particular designed for operation of vessels at sea.

### Disclosure of the state of art.

As to the state of art, reference is made to the following patent publications: US-8.608.521, US-8.682.516, US-2005/106953, US-7.241.192, EP-1.341.694, US 2008/113999 US-8.118.627, EP-2.125.506, US-2011/0237141 and EP-2.321.172, US 2012/0831730 A1, and FR 3013321 A1.

Referring to the US-8.608.521 and US-8.682.516, which disclose the need for a normal dry-clutch or a dog clutch, since the combustion engine and the electro motor must rotate at the same speed the moment they are interconnected. In contrast to the situation need when the connection is hydraulic or electromagnetic.

US-2005/106953 assumes that the electromotor is instantly connected to cooperate with the combustion diesel engine. Therefore the electromotor must be supplied with current from a separate generator at all times. In this respect, we also refer to US-7.241.192 and EP-1.341.694.

None of the abovementioned patent discloses the use of a torque meter to measure the rotational shaft momentum, and the use of this feature to operate the hybrid engine, as is the case for the present invention.

An electro magnetic clutch (a dry clutch) is able to start the propeller system with a difference in rotational speed under 800 rpm (rotations per minute), that is when the engine is operating and the propeller unit is started from a speed of zero. When connecting at a rotational speed above 800 rpm the difference in rotational speed should not be more than +/- 100 rpm. Normally this kind of clutch, which does not include any cooling system, is able to connect in a range of 0.1 to 3 seconds.
A hydraulic operating clutch, which is preferred in the present invention, is able to handle a higher difference in rotational speed when the propulsion combustion engine runs and the propeller system is to start from zero rpm. During operation the speed difference may be higher than for a electromagnetic clutch. This is due to the oil in the clutch box may be cooled in a separate oil cooling system, and is therefore more efficient in removing heat from the system than the electromagnetic clutch.

Furthermore, the time for connecting may be longer, since the clutch rim includes a thin oil film that reduces the tear of the clutch surfaces.

Also the patent document US-2008/113999 assumes that the electromotor operate as a generator or as an engine, and seems connected all the time, either to supply energy or to brake the combustion engine, which means that the accumulator is simultaneously charged. Reference in this respect is also made to the abovementioned US-8.118.627 and EP-2125506.

US 2012/083170A1 discloses a general system of a hybrid propulsion system. However there is a lack of vibrational dampening. It is stated as being directed toward small sport craft. The electric motor hangs off the flywheel housing of the internal combustion motor; making it unsuitable for large heavy electromotors.

FR 3013321A1 discloses a system that uses elastic couplings between parts of the drive shaft. However, two engines are found upon a dampening plate. This plate has a reasonable large freedom of movement that will result in problems with large vertical height changes in a commercial vessel.

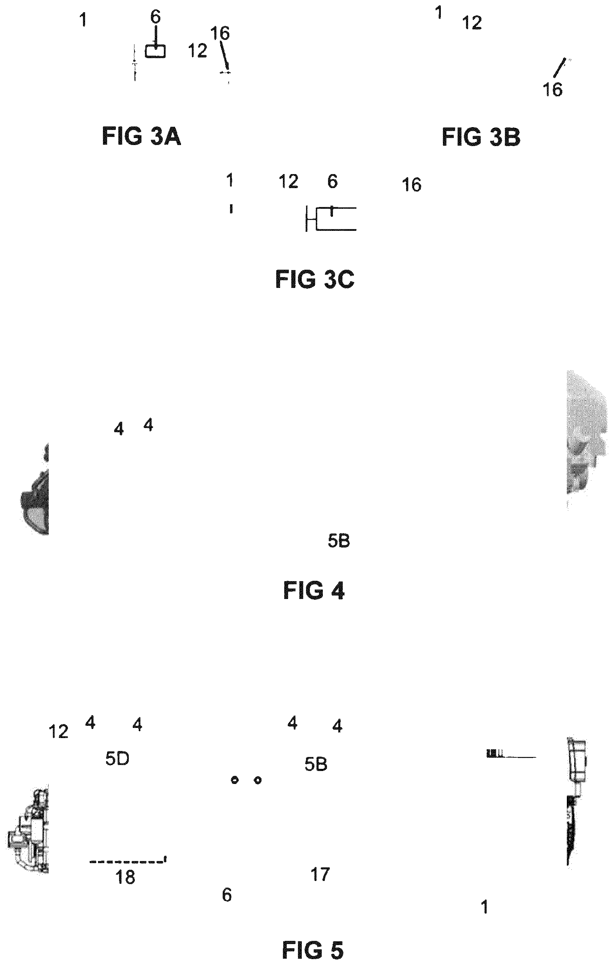

A further discussion of the background of hybrid motor systems will be presented in the discussion of FIGS 3A - 3C which are prior art of variants of hybrid motor systems. These drawing figures disclose prior art solutions for a hybrid motor system of a propulsion combustion engine 1, electro motor 6, and a transmission unit 12. This hybrid motor system is used to power a propeller 16.

In FIG 3A and 3B, the propulsion combustion engine 1 is connected to the transmission unit 12. It is the placement of the electromotor 6 that is different.
In FIG 3A, the electromotor 6 sends power into the shaft system 5 between the propulsion motor 1 and the transmission unit 12. In FIG 3B, the power from the electromotor 6 is not sent into the shaft system 5, but directly into the gear box. In FIG 3C the electromotor 6 is attached to the shaft system 5 after the transmission unit 12.

The inventions in each of FIG 3A to 3C use a different shaft diameter for the electromotor 6 and the rest of the shaft system 5. It is common with a ratio of 2:1 for the shaft size associated with a propulsion combustion engine1 as compared to an electromotor 6. The importance of this 2:1 ratio will be discussed shortly.
To compensate for this difference in ratio a PTI (power taken in) solution is used to mechanically add the power of the electromotor 6 indirectly to the shaft system 5.

Another problem that occurs in a system such as shown in FIG 3C is the rotational speed change that occurs in the transmission unit 12. To compensate for this, the shaft between the transmission unit 12 and the propeller 16 must be increased. Increasing it take more space, and thus puts the propeller deeper into the water; requiring more power for movement. Additionally, a large electro motor 6 is very heavy and will add a large amount of weight to the back of the vessel. This is fine for large vessels that carry shipping containers, it is not fine for commercial vessels where fuel efficiency and comfort is important.

Additionally, this method does not allow as large of a range of options during operation. It is impossible for the gearbox to be used by the electromotor 6. That limits operational conditions by which it can be engaged without burning out the electromotor 6.

It will appear that the hybrid motor system of the present invention relates on a different sequence of the combustion engine, electro motor and the transmission unit compared with that of Figures 3A, 3B and 3C.

### Objects of the present invention

Based on this, the aim of the invention is to provide a new and inventive combination of the above mentioned hybrid system, combining an e-motor and a propulsion combustion engine.

An objective is to achieve a new structure of a hybrid system that facilitates to have the propulsion combustion engine charge a battery package connected to the electric motor onboard the vessel when operated at open sea or outside the critical harbor areas. Another object is to be able to operate the system in its electrical mode in narrow waters, harbor areas and areas close to cities. Thus, local emission of harmful combustion gases in dense populated areas is reduced.

Another object of the present invention is to use the same shaft diameter throughout the whole length of hybrid engine, that is both in the propulsion combustion engine and in the electromotor.

The new structure of the hybrid system is intended for installation not only in new vessels, but also for repowering of old vessels.

The term combustion engine implies an engine operated by a liquid or gaseous fuel, such as the use of a diesel, a gasoline or a LNG fuel or similar fuels. It is intended that the new hybrid system of the invention provide for a 100 % flexibility of using the green energy for battery charging where it is available, as well as the possibility of charging during operation at sea. It also utilizes the best efficiency of the propulsion combustion engine. Use of the electric motor as a generator for charging of the batteries will be allowed in the most effective load and speed range for the propulsion combustion engine during operation / traveling.

An object of the invention is to provide a new method to operate a hybrid engine system.

Further an object of the invention is to provide new structural units in a combined engine propulsion system. The new system enables the electromotor to easily be changed between a propulsion drive mode and a sole battery accumulator charging mode, or for it to operate in a combined charging and propulsion mode. During the propulsion mode the electromotor is able to propel a drive shaft in the system.

Normally the shaft of a propulsion combustion engine is about twice the similar diameter of an electro motor, for example a diameter of 8 cm contrary to 4 cm. This is not a possible option for the present invention, because if two such engines different shaft diameters are interconnected in a common axis, the operation of the propulsion combustion engine will likely cause the electro motor shaft to break off.

### Short summary of the Invention

The hybrid motor system including a combination of a propulsion combustion engine and an electro motor operative driving a common shaft, is characterized in that
the exit shaft part from the propulsion combustion engine, passes through a clutch unit operating in a ratio of approximately 1:1,
are at least one rotatable elastic joint units are interconnected to the shaft parts between said propulsion combustion engine and electromotor and the electromotor and the transmission respectively; and where each of said at least one elastic joint unit comprises universal mutually opposite joint flange structures which are mutually connected by a number of pivotable link arms, each arm extending from a first flange structure to the other flange structure and is anchored in a pivotable manner to said respective flange structures to enable the joint units to absorb vibrations in the hybrid propulsion system.

Preferred embodiments of the hybrid propulsion system appear in dependent claims 2-11.

A method for starting an exit shaft of a vessel from rest by an electromotor by operating a hybrid propulsion system is defined in independent claim 11.

A preferred use of the hybrid propulsion system relates to that adjacent to the electromotor exit, sensors for a torque meter and a sensor are arranged to measure the speed of the electromotor shaft, in that the a main parts are connected via a control line to start an exit shaft of a vessel from rest with an electromotor.
In accordance wit the first aspect of an isolating fixture, in that the back face of the inner cylinder if fixedly attached to an attachment plate perpendicular to the attachment plate's long axis.

Thus the application of the present invention is for the use of a torque meter and sensors in a hybrid motor system to feed information to an operator or operating unit to operate the electro motor to dampen unwanted vibrational frequencies from propeller damage. In accordance with the first use of the present invention of an isolating fixture for electrically isolating and vibration dampening an electromotor.

The new hybrid system operated in the above manner, has an advantage in being able to charge the batteries onboard during operation at open sea. The use of the electric motor in certain speed ranges and in docking situations contributes to a potential fuel savings of above 10 % by enabling the propulsion combustion engine to run mostly at its most fuel-efficient load and speed range.

Additionally savings in total operating costs may be achieved if the batteries can be charged with electricity shore power (green power - hydro power electricity) when stationary at dock. However, todays electrical drive systems are inflexible and requires expensive charging infrastructure on land for the operators, which also is not always available on the coastline.

### Brief Description of the Figures

The present invention is by now further described with reference to the following drawing figures,wherein:
FIG 1 discloses the components of hybrid system according to the invention.
FIG 2 discloses a table of the operation of hybrid system of the invention.
FIG 3A discloses prior art of a type of hybrid motor system.
FIG 3B discloses prior art of a type of hybrid motor system.
FIG 3C discloses prior art of a type of hybrid motor system.
FIG 4 discloses perspective view of the preferred embodiment of the hybrid motor system, as also shown in figure 1.
FIG 5 discloses a side view of the preferred embodiment of the hybrid motor system, as also shown in figure 1.
FIG 6A discloses a perspective view of an embodiment of the elastic linkage system to be used as a flexible lin unit in the inventive hybrid motor system.
FIG 6B discloses the preferred embodiment of the elastic linkage system between the electromotor and the propulsion combustion engine, including two elastic link units as shown in figure 6A.
FIG 6C shows in a perspective view of another preferred embodiment of the elastic linkage system between the electromotor and the transmission unit.
FIG 7A discloses an overview from the top of an embodiment of the electromotor isolating mount along with an electromotor.
FIG 7B discloses an overview from a lateral slice of an embodiment of the isolating cylinder along with an electromotor.
FIG 7C discloses a front view of an electromotor housing being suspended by electromotor isolating mounts.
FIG 8, 9A and 9B discloses perspective,side and top views of an embodiment of the electromotor isolating mount.
FIG 10 discloses a front view of an embodiment of the electromotor isolation mount along with an electromotor used in the hybrid system.
FIG 11 discloses an axial slice view of an embodiment of the isolating fixture of the electromotor isolating mount.

### Detailed description of the invention,

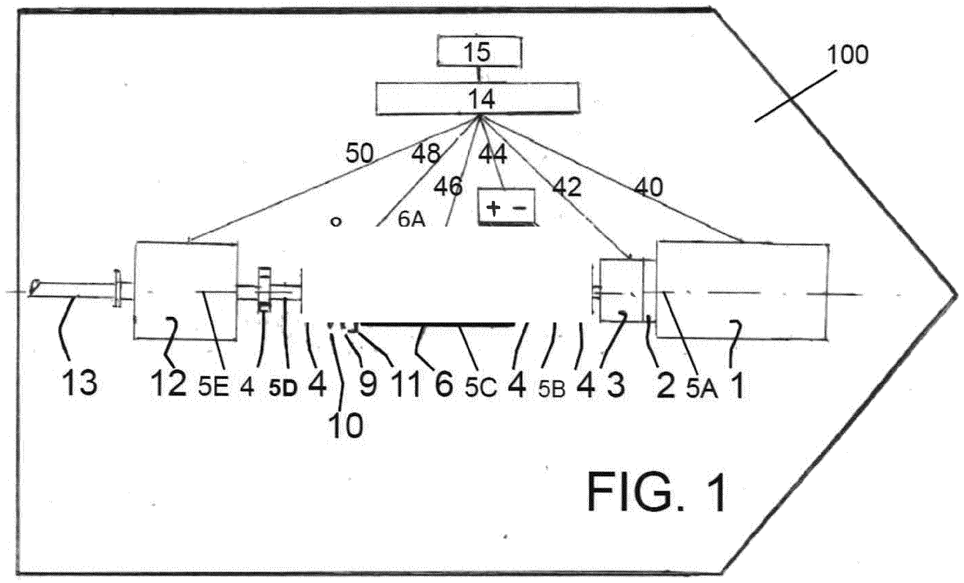

Using the attached drawings, the technical contents, and detailed a preferred structure of a hybrid engine system of the invention will now be disclosed with reference to figure 1.

The hybrid propulsion system of the invention consists of the following main components, with reference to the numbers in figure 1, see also figures 4 and 5. The main components are situated in the following order: a propulsion combustion engine 1, an electromotor 6 and a transmission unit 12 and finally an exit shaft of a propulsion system 13, the structures of which are now disclosed. The outline frame marked 100 on figure 1 represents in a non-restricting example, a vessel in which the hybrid system of the invention is installed.

The propulsion combustion engine 1 runs an electromotor /generator 6 through an electromagnetic / hydraulic clutch 3 in a ratio of about 1:1. This means that the clutch connects or disconnects the shaft parts with no or minimal extent of slippage.

The power from the propulsion combustion engine 1 (also high speed engines) can mechanically operate the propulsion system 13 via a special and distinguishable designed shaft system 5A-E according to the invention. The shaft system is interconnected first between the propulsion combustion engine 1 and the electro motor 6, and secondly between the electro motor 6 and the following transmission unit 12.

An outlet shaft 5A is connected to a clutch device 3 via an elastic coupling 2. This elastic coupling is structured to absorb possible differences in the movements of the propulsion combustion engine 1 exit shaft part 5A compared with the clutch 3 input shaft. That is both directed to minor differences in rotational speed, occurring vibrations and minor axial movements between the shaft parts.

This elastic coupling 2 may be similar to the flange structures 4 as will be disclosed below, that is also representing elastic universal joint structures able to absorb small differences in rotational and axial movements, and other vibration influences.

The elastic coupling 2 between the propulsion combustion engine and the clutch 3 adds the following advantages to the hybrid system, as follows:
- It dampens occurring vibratory torques due to rapid load changes from the two difference power sources (the electric motor and the propulsion engine).
- It decreases any torsional vibrations in the whole drive chain from propulsion combustion engine to the propulsion system at the rear.
- It dampens shocks coming from the propulsion system.
- It compensates for axial-, radial- and angel- misalignments in components rotating together, and further it contributes to noise reduction.

The clutch 3 is either electromagnetic or hydraulic. The clutch 3 enables the running propulsion combustion engine 1 to be connected/ disconnected from shaft 5 and the other parts of the hybrid system. An example of this particular usage is when the propulsion system of the vessel is solely operated by the following electromotor 6 of

the hybrid system. Then the combustion engine is disconnected from the main shaft operation.

As mentioned, the propulsion combustion engine 1 is connected to the electromagnetic / hydraulic clutch 3 operating in a ratio of about 1:1, and thus may engage or disengage the torque into the subsequent shaft 5 from the propulsion combustion engine.

Between the clutch device 3 and the electromotor 6, two flange structures 4 with elastic link arms, are interconnected with a mutual distance between them, thus in fact dividing the shaft 5 in several shaft parts, see the shaft part 5B between said two flange structures 4 in the figures. In fact the shaft part 5B include one flexible flange structure closer to the clutch unit 3, and one closer to the electromotor 6. Similarlly the electromotor 6 exit shaft includes one flexible flange structure closer to the electromotor 6, and one closer to the transmission unit 12 at the rear of the hybrid propulsion system.

According to a preferred embodiment, a hydraulic clutch 3 operates to connect/ disconnect the propulsion combustion engine 1 from the shaft 5. This kind of clutch is able to handle a higher difference in rotational speed when the propulsion combustion engine runs and the propeller system is to start from zero rpm. In operation the speed difference may be higher than for a electromagnetic clutch. This is due to the oil in the clutch box may be cooled in a separate oil cooling system, and is therefore more efficient in removing heat from the system than the electromagnetic clutch, as disclosed initially.

The two flange structures 4 represents elastic universal joint structures, thus enabling the system to be able to absorb vibrations, transverse and axial movements in the system. After being exposed to pressure and tension movements, the joint elements revert to their initial state. The joint elements preferably comprise rubber bushings. This is a relevant challenge for a vessel, for example as the total length of the propulsion system structure may be several meters. The different components of the system are exposed to a various kinds of vibrations and transverse and axial movements when operating the vessel.

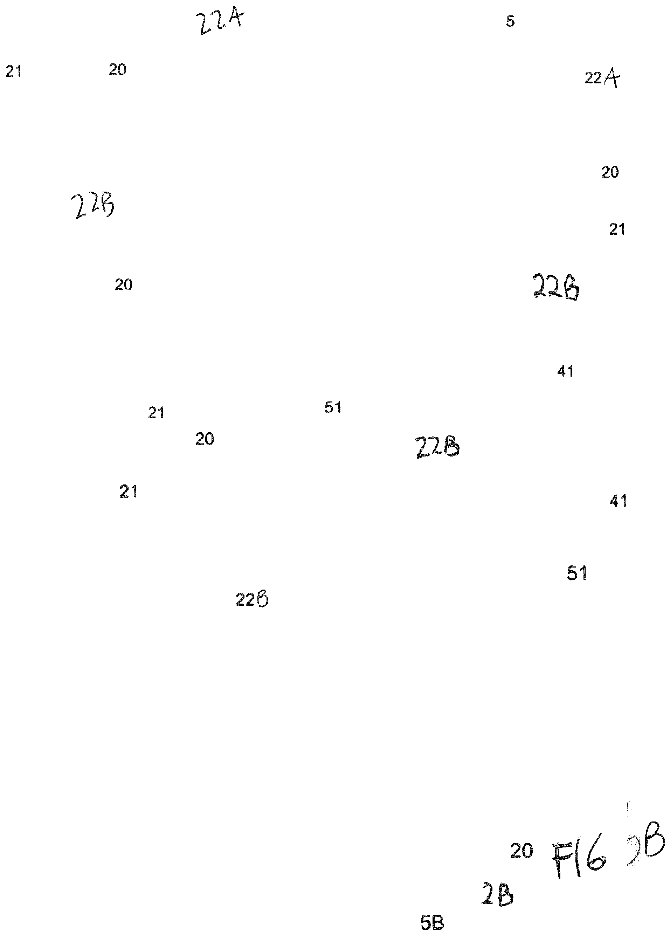

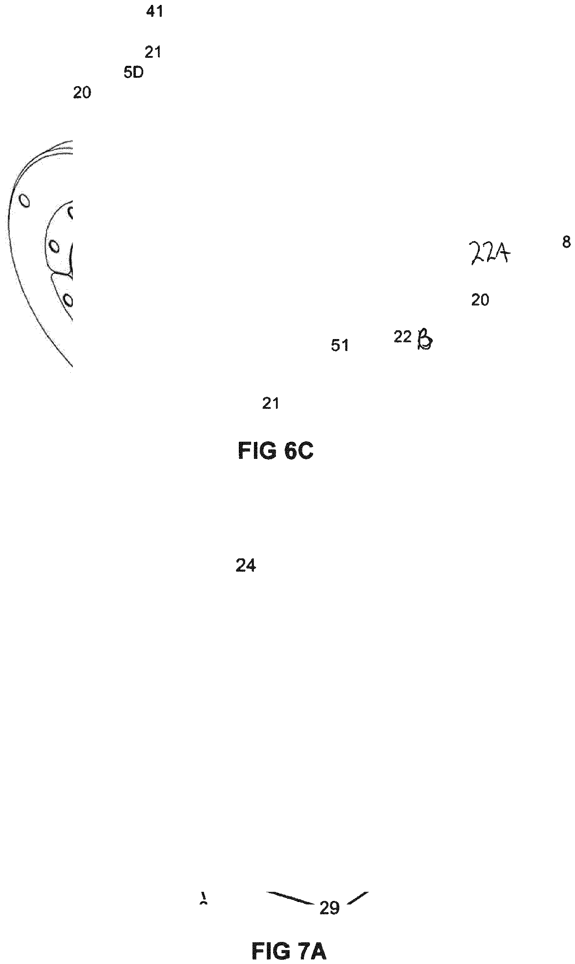

Each flexible flange structure, se figure 6, is comprised of two adjacent flanges including at least three link arms eaqually spaced around the transverse circumference of each flange structure interconnecting the two flange structures.

The first end of each link arm is connected in a pivotable manner to an axial directed link axis in a transverse surface of one (ring shaped) joint rim flange structure 41 of the first shaft part. The above mentioned link axis comprises a rubber bushing structure, the said link axis being located at a distance from and in parallel to the shaft axis 5.

The second end of each link arm is similarly connected in a pivotable manner to a radial directed bolt 22B (a hinge pin) on the circumferential edge 51 of the second shaft 5, that is in a plane parallel to the top surface of the joint rim 41.

As appears in figures 6A-C, said circumferential edge 51 of the second shaft 5, represents the end portion of the shaft part 5 extending from one end, while the ring shaped) joint rim flange structure represents the similar en d portion of the shaft part 5 extending from the opposite end. Said shaft end portion being linked by the flexible transverse extending arms.

The radial directed link axis of the in the other flange structure, also including the rubber bushing link structure. The two axis of each arm is mounted to each other at an angle of 90°, that is: one directed in parallel to the shaft axis, and the other perpendicular to the shaft axis.

Thus this kind of link is designed for push- / pull- movements and creates a minimum of reaction forces. The parts are bolted together as disclosed, and all parts are also electrically isolated from each other in flexible rubber bushings.

Using this "elastic" system on each side of the E- motor we can protect the rest of the hybrid systems components against spark-overs, electrical corrosion and also vibrations from entering into the other components, as well as reducing noise from spreading further in the vessel / floating unit structure.

Thus between the propulsion combustion engine 1 and electro motor 6 there are inserted at least two such flange structures, which increases the flexibility of the long shaft structure, and its capacity to absorb vibrations in all directions when the propulsion combustion and electro motors operate.

The shaft 5C leads further into the electric motor unit 6, wherein it represents the rotor element surrounded by a stator element in the housing 6A of the electromotor 6. Thus a running rotor 6 may either generate electricity to charge an adjacent battery package or accumulator 7 as shown in the figure, or in itself be rotated by the battery 7, i.e. for both modes where the propulsion combustion engine 1 is either connected or disconnected to the shaft 5. The rotor element may also be rotated not operating in the electro motor mode, just being part of the shaft from the propulsion combustion engine to the transmission unit 12.

All electric motor structures comprising rotor and stator elements are applicable for the present invention.

At the rear end of the electromotor 6, the shaft extends into the transmission unit 12. At the electromotor exit, there are mounted two sensors. One sensor 9 including a torque meter 8 to measure the torque on the shaft 5, and there is a speedsensor 10 for measuring the rotational speed (RPM) of the electromotor 6 exit shaft part 5D. Further the structure comprises brackets 11 mounted on the electromotor housing to support the torque sensors 9 and speed sensors 10. To control the total torque on the shaft 5 at the exit of the electromotor via the terminal box 14, it is essential to be able to regulate the individual operation of the propulsion combustion engine vs the electromotor in the combined hybrid engine set.

Forward of the transmission unit 12 (i.e. rear of the electromotor) two further flanges 4 of the abovementioned type, are mounted with a link arm structure similar to those between the propulsion combustion engine and electromotor. The outgoing drive shaft 13 is for running the propulsion unit rear of or behind the transmission unit 12. A terminal box 14 connects/operates all electrical interfaces in the system.

The preferred above mentioned electromotor 6 is a permanent magnet synchronous or asynchronous motor that can be used both as motor and as a generator. The electromotor has a special characteristic mechanical design, with a bigger shaft diameter compared to a standard structured electromotor, and it comes with drive flanges at both ends. This technical solution allows a full power performance from the propulsion combustion engine to go through the main shaft of the electromotor.

The carriage for the sensors for the torque and speed is mounted to the electromotor housing. The axial forces on the electromotor created by the movements of the propulsion combustion engine, the electromotor itself and the transmission in relation to each other is taken care of by the elastic link arms installed on both ends of the electromotor. These link arms are minimizing the axial forces, which is critical for ensuring a safe operation of the electromotor.

When the propulsion combustion engine runs the electromotor, it can work as a generator at variable speeds for charging the batteries. The electromotor can also work as a motor running at variable speeds supporting the propulsion combustion engine with additional torque (booster mode) to the rotating rear shaft 13 of the system. The E-motor can change from working as a generator to working also as a motor caused by a change in the electric field controlled by a signal from the Hybrid control system 15. The Hybrid control system 15 controls the different operating modes and the power needed for motor / generator and charging of the batteries etc. By disengaging the combustion engine via the electromagnetic / hydraulic clutch, the electric mode can be used. The electromotor receives its power from the battery packages 7 or from the onboard genset(s) if available.

This hybrid system is individually designed for each vessel and its intended operation, in terms of the available battery capacity and charging time either on board or the shore power available. The operation routines and duration are among the factors that affects this.

The power absorption from the hybrid propulsion system at different speeds is predefined in the hybrid control system 15 and the values are measured / matched /verified in the pre calibrated torque controller. The individual operation of all elements, i.e. the propulsion combustion engine 1, the clutch unit 3, the electromotor 6 and its interconnected accumulator unit 7, and the rear transmission unit 12 is guided by the terminal box 14 for all electrical interfaces with an input to the hybrid control unit 15. The hybrid engine operation is based on the input data retrieved for rotational and torque measurements in the units 9 and 10 of the exit shaft of the el-motor 6, which data enter into the terminal box 14 for relevant handling. See the relevant connecting lines from all main the hybrid engine elements to the control system 14/15 as shown in figure 1.

From this control unit 14/15 signal line 40 extends to the combustion engine, line 42 to the clutch 3, line 44 to the battery package 7, line 46 the elctromotor, 48 to the rotational speed and torsion meters 9-10 and line 50 to the rear transmission unit 12. All lines establish to-way communication between the unit 14/15 and the elements 40-48. Signals relating to the operation properties (for example rotation, el-power effect, clutch and gear box settings) of the element 1-3-6-9/10-12 are received in control unit 14/15 which in return may adjust their operational properties for the relevant situation.

Depending on the power (torque) needed and the battery capacity available the control system can choose the most economical operation /modus depending on the vessels operation. The operator can choose between sole electric propulsion modus, a combined combustion and electric (hybrid) propulsion modus, or combustion operation in combination with generator modus for charging of the onboard batteries. In the modus for shore power the batteries are charged either from a battery package(s), or direct from a high voltage system matching up the frequency, phase and voltage given in the vessels power system main terminal box 14.

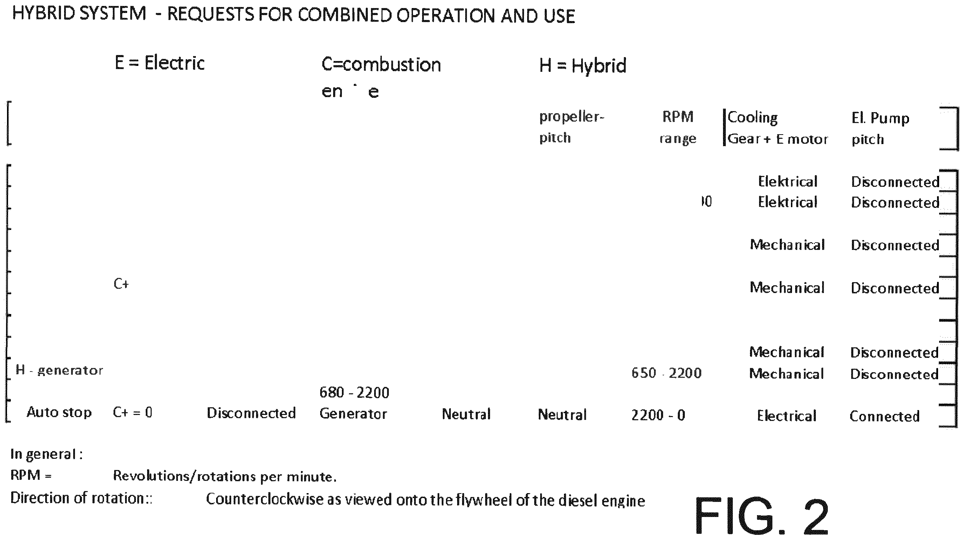

Typical operation modes of the propulsion system shown in figure 2.
This table shows in columns the actual operative state of the different units of the plant: i.e. columns on figure 2 defining the propulsion combustion engine 1, the coupling device or clutch 3, the E-motor 6, the transmission/gear unit 12, the propulsion unit 13, the rotational speed range, the cooling system and electrical pump for operating the pitch (back up). The different operations are shown in the horizontal lines in the figure. That is the start-up and drive modes for: 1) the electromotor, 2) the combustion engine and 3) the motor/generator unit. In addition the mode of auto stop appear from the table.

When operating in the electromotor 6 mode only, the clutch 3 is at a disconnected state, disconnecting the propulsion combustion engine. After an initial start up mode, the gear 12 connects to start the rotation of the propulsion system 13. The rpm of the input shaft 5E may vary in a range of for example 650 rpm (the rotational speed at idle), and up to ca. 1200 rpm.

When starting the propulsion combustion engine at idling (approximately 650 rpm, the clutch 3 is disconnected (neutral state) and the transmission is at neutral state. Then the clutch connects the shaft 5 and operates at for example 650 rpm, and the electro motor part may operate as a generator at 650 - 2100 rpm to charge the accumulator package 7. At the same time the transmission clutch 12 is engaged from neutral to engaged (either forward or backward), thereby driving the propulsion unit 13. The rotational speed for the propulsion combustion engine may be in a range of 650 - 2100 rpm for example.

In another operational mode, both the propulsion combustion engine 1 and the electromotor 6 runs together combined to operate the propulsion unit 13.
The hybrid propulsion system of the invention may be applied to operate a ship, a floating unit, to be able to run in a electromotor drive mode only, or in a combined propulsion combustion engine and electromotor mode, where partly also the propulsion combustion engine charges the battery package 7 via and connected to the electromotor.

Further important details of the hybrid propulsion system, the elastic joints, and the electrical isolation of the electromotor will now be given.

This as will be discussed later in the presentation of FIG 4 and FIG 5, the system of the present invention places the electromotor 6 between the propulsion combustion engine 1 and the transmission unit 12. There is a shaft system 5 that runs between the propulsion combustion engine 1, through the electromotor 6, and into the transmission unit 12. The present invention also uses a common drive shaft 5 where all parts (5A - 5C) have roughly the same diameter. A propulsion combustion engine 1 that is strong enough to turn the propeller 16 of a commercial vessel is very powerful. In a hybrid system, this propulsion combustion engine 1 power could easily damage the electromotor 6. If the shaft from the electromotor 6 was directly connected to the shaft from the propulsion combustion engine 1 (at the 2:1) ration, the angular momentum experienced by the electromotor 6 shaft would be 16 times greater than the angular momentum experienced by the propulsion combustion engine 1 shaft. The result of which would be that the two shafts would shear at the interface and would not longer form a continuous shaft unit.

The 1:1 size of the different parts of the shaft system 5 also provides advantages for the sensors of the system. The sensors read both more and more accurate information than if it wasn't all on a common drive shaft. Additionally, if the propeller starts to introduce abnormal frequencies into the shaft system 5 (e.g. propeller damage) the torque meter 8 and sensors on the electromotor 9 can give information to the hybrid control system 15 such that it can adjust the operation parameters of the electromotor 6 to dampen the frequency of these unwanted vibrations. Additionally, it allows the electromotor 6 to start the propeller 16 of a commercial vessel from rest, without the propulsion combustion motor powering the propeller 16 as will be explained later.

Reference is made to FIG 4 and FIG 5. These disclose an overall view of the preferred embodiment of the hybrid motor system. The system will be explained in a path that travels from the propulsion combustion engine 1 to the transmission unit 12 and describes the components in order.

The propulsion combustion engine 1 is connected to the clutch 3. The clutch 3 is connected to the electromotor 6 by the engine to electro linkage 15. This linkage is comprised of two elastic joint units 4 on roughly on each end of the engine to electro shaft 5B. This engine to electro shaft 5B is shown in FIG 6C. The electromotor 6 motor is connected to the transmission unit 12 by the electro to transmission linkage 18. This electro to transmission linkage 18 is comprised of two elastic joint units 4 roughly on each end of the ends of an electro to transmission shaft 5D. This electro to transmission shaft 5D is shown in FIG 6B. The drive system 5 is comprised of the propulsion engine shaft 5A (not shown) inside the propulsion combustion engine 1, connected to the engine to electro linkage 17, that is connected to the electromotor shaft 5C (not shown) inside the electromotor 6, that is connected to the electro to transmission shaft 5D, and finally to the transmission unit shaft 5E (also not shown). The electro to transmission linkage 18 has a torque meter 8 between the elastic joint unit 4 and the electromotor 6.

Equivalently, the drive system 5 can be described as comprising the propulsion engine shaft 5A, connected to the engine to electro shaft 5B with one elastic joint unit 4 one each end, connected the electro motor shaft 5C, connected to the electro to transmission shaft 5D with one elastic joint unit 4 one each end, to the transmission unit shaft 5E.

In commercial marine vessels, special considerations must be taken to dampen vibrations present in the system. If not, then there is a large risk of damaging the system. Vibration dampening is a critical design criterion when designing a drive shaft system 5 of a commercial vessel. Motors are very vulnerable to axial vibrations; electromotors even more so. These push the drive shaft into the gears inside the engine (or roller bearings). A lack of vibration dampening will greatly reduce the lifetime of the equipment.

An additional design criterion is related to the torques involved in a system. The propulsion combustion engine 1 has a high torque output. As such, the shaft system 5 needs to be able to accept that torque with little to no vibrations traveling through the system 5. A drive shaft in between the propulsion combustion engine 1 and the electromotor 6 must be able to transmit almost all of the torque from the propulsion combustion engine 1. This is also a requirement for the drive shaft in between the electromotor and the transmission unit. This is particularly critical because the present invention uses a 1:1 shaft size in the entire system. One of the requirements in the present invention is that the system effectively tolerates axial and any transverse vibrations in the system.

A series of elastic joint units 4 and elastic couplings are used to achieve the desired results. The preferred embodiment of the present invention uses elastic joint units 4 from Centa called Centalink.

Figure 6A discloses a perspective view of an embodiment of the elastic joint system. There are three link arms 20 disposed radially equidistantly around the joint rim 41. One end of each link arm 20 is attached to the joint rim 41 using a link bolt 22A through the end of the link arm 20 in a perpendicular direction, i.e. in parallel to the shaft 5 axis.

Each of these link arms 20 connections are such that said link arms 20 can still pivot. The link arms 20 are extended toward the circumferential shaft edge 51 of the shaft 5, that is in a plane parallel to the top surface of the joint rim 41. The second end of the link arm 20 is fastened using a link bolt 22B into the shaft edge. This link bolt 22B is inserted in a direction that is parallel to the joint rim 41 face. I.e in a direction perpendicular to the shaft 5 surface These connections through the second link arms are also pivotable. The axial axis of the shaft 5 is located perpendicular to the face of the joint rim 41; centered in the middle of the joint rim 41. Elastic rubber bushings fit around each link bolt 22A and 22B such that there is no metal to metal contact between the link arms 20 and the joint rim 41. There is also no metal to metal contact between the link arms 20 and the shaft edge 51. The elastic link bushings 21 are very important. The elastic nature allows the system to absorb vibrations and motion in the shaft system and return to their original shape and position. This is also known as self centering. Additionally, the elastic link bushings also provides for electrically insulation in the system preventing spark-overs. The importance of this will be shown later when discussing FIGs 7A-11B.

Figure 6B discloses the preferred embodiment of the elastic linkage system between
the electromotor 6 and the propulsion combustion engine 1. The engine to electro shaft 5B is found in between two elastic joint units 4 such as disclosed in FIG 6A. The protruding end on the left side of the figure connects to the shaft 5C inside the electromotor 6.

FIG 6C discloses the preferred embodiment of the elastic linkage system between
the electromotor 6 and the transmission unit 12. The electro to transmission shaft 5D is found in between two elastic joint units 4 such as disclosed in FIG 6A. The protruding end on the left side of the figure connects to the shaft 5C inside the electromotor 6.

It is important to note that there can be more than 3 link arms 20 and that they do not have to be disposed equidistantly around the rim join 41. More link arms are added depending on the maximum torque to be applied and the dampening needs of the system.

Figure 7A is an overview from the top of an embodiment of the electromotor 6 isolating mount 19 along with an electromotor 6. The hybrid engine system is sensitive to vibrations due to the length of the drive shafts in a commercial vessel.
The electromotor 6 is very sensitive to axial vibrations. However it is also important to electrically isolate the electromotor 6 from the hybrid engine system. If an internal combustion engine is used as the propulsion combustion engine 1, it will run between around 12 and 24 volts. On the other hand, an electromotor 6 can run at about 400 to 600 volts. That difference makes it very dangerous and likely, if precautions are not taken, for high voltage to enter the entire hybrid energy system.
This would obviously be disastrous for the equipment and the propulsion of the system. It would also be dangerous to personnel and passengers. To this end, two parts of the system are designed to electrically isolate the electromotor 6 from the rest of the system. The first is through the use of elastic joint units 4. These contain rubber link bushings 21 that make it difficult for electricity to pass through the electro to transmission shaft 5D and the engine to electro shaft 5B. Another part of this system is the mounting system used for the electromotor 6.

Figure 7A is an top overview of the system. The electromotor housing 6A is located between two isolating mounting 19 sections. More detail of this will be presented in FIGs 8A to 11B. From the top, the isolating fixtures 29 are located on top of the mounting platform 24. One isolating fixture 29 is located at each corner of the electromotor housing 6A. In this embodiment, a solid inner cylinder is the part that attaches the isolating fixture 29 to the electromotor housing 6A. In more preferred embodiments, disclosed later, an attachment plate 299 (not shown) is fixedly connected to the end of the inner cylinder and this bolted to the electromotor housing 6A. The inner cylinder 295 is component of the isolating fixtures 29.

There are other embodiments of the present invention. More than one isolating fixture could be used if more electrical insulation was needed. Depending on the configuration of the electromotor housing 6A, moving the isolating fixtures might be necessary.

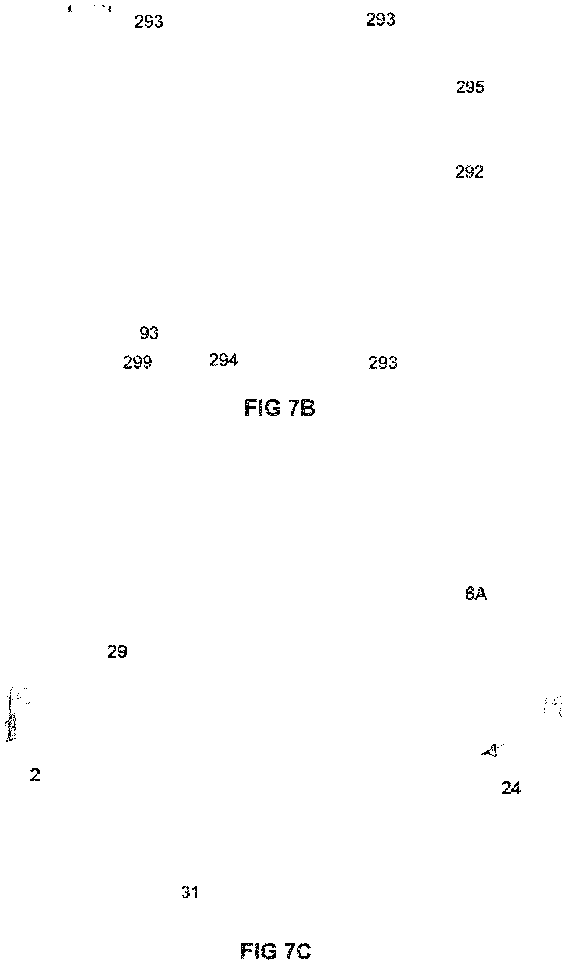

Figure 7B is an overview from a lateral slice of an embodiment of the isolating fixture 29 along with an electromotor 6. The isolating fixture 29 is one of the main parts of the mounting system 21 that ensures that the electromotor 6 is electrically isolated.
Also, because of the elastic insulating material used inside the isolating fixture 29, it also significantly helps with axial and transverse vibrations. Sizes and exact position of the elements in the isolating fixture 29 is only by way of illustrative example. The rough overview shows the location of the isolating material in the isolating fixture 29.
On the inside of this plate is located an inner cylinder 295 along the same center axial axis as the cover plate 292. Isolating rings 293 are found around the ends at each end of the inner cylinder 295. An isolating bushing 294 rests along the length of the outer surface of the inner cylinder 295. The cover plate 292 can be removed by removing the screw 291 (not shown) in the center of the cover plate 292. The attachment plate 299 is located on the end of the inner cylinder 295; with the attachment plate 299 fixedly connected to the inner cylinder 295. These can be a single piece or two separate pieces that are connected together. Either way. It may be possible to use the inner cylinder alone to secure the isolation fixture 29. The combination of the inner cylinder 295 and the attachment plate 299 can be referred to as an isolation pin 30. If the inner cylinder 295 does not have an attachment plate affixed, it can still be referred to as an isolation pin 30.

Figure 7C is a front view of an electromotor 6 housing 6A being suspended by electromotor isolating mounts 19. The electromotor isolating mounts 19 rest on top of foundations 31. The mounting base 24 rests upon mounting platform 24 that in turn rests upon the foundation 31. The attachment plate 299 connects the insolating fixture 29 to the electromotor housing 6A. In this way, the electromotor 6 is held off the ship. With the electromotor isolating mounts 19, the electromotor is now electrically isolated from the system.

Figure 8 is a perspective view of an embodiment of the electromotor isolating mount 19. This shows a more detailed figure than FIG 7A. These figures show a mounting platform 24 that is bolted to a foundation 31 (not shown). A mounting plate 25 is bolted onto the mounting platform 24 through use of mounting bolts 23 inserted perpendicular to the mounting plate's 25 top surface. The fixture housing 296 is a hollow cylinder and is fixed to the mounting base 25. The fixture housing 296 and the mounting base 25 can be a single piece or two separate pieces that are permanently affixed together. The attachment plate 299 is perpendicular the mounting platform 24. The attachment plate usually has a part that is below the mounting platform 24, but this has been removed for clarity.

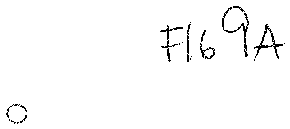

Figure 9A discloses a front view of an embodiment of the electromotor isolating mount 19. As in FIG 8 the mounting plate 25 is bolted onto the mounting platform 24 through use of mounting bolts 23 inserted perpendicular to the mounting plate's 25 top surface. The cover plate 292 is held in place by a screw 291. The attachment plate 299 is located both above and below the mounting platform 24. The mounting platform 24 will normally be found off the surface of the vessel on a foundation 31 (not shown). The materials, height, and angle between the electromotor isolating mount 19 can vary depending on the specific needs of the task. One skilled in the art will easily be able to determine this.

Figure 9B is a top view of an embodiment of the electromotor isolating mount 19.
The mounting base 25 is mounted to the mounting platform 24 by using mounting bolts 23. The fixture housing 296 is fixedly connected the mounting base 25 and the attachment plate 299 is a part of the isolating fixture 29 and is fixedly attached at the back of the electromotor isolating mount 19.

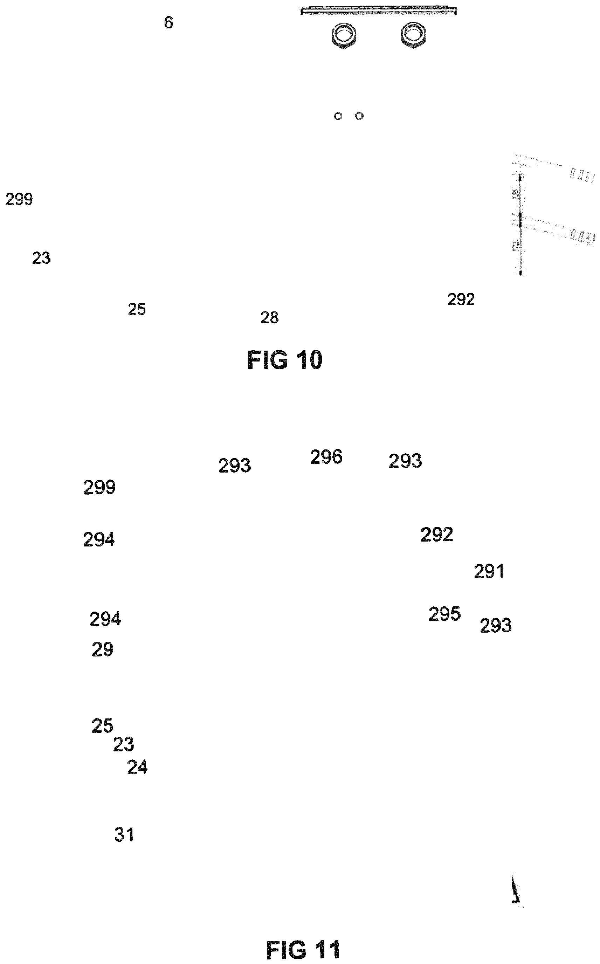

Figure 10 discloses a side view of an embodiment of the electromotor isolating mount 19 along with an electromotor housing 6. Two isolating fixtures 29 are found on each corner of the electromotor housing 6. The isolating fixtures have the same configuration as that disclosed by 9A. They are fixedly connected to the mounting base 25 which is bolted to the mounting platform 24 by using mounting bolts 23. The attachment plate 299 of the isolating fixture attaches the electromotor housing 6A to the isolating fixture. The foundation 31 and the attachment plate 299 that is below the mounting platform 24 are not shown.

Figure 11 discloses an axial slice view of an embodiment of the isolating fixture 29 of the electromotor isolating mount 19. The isolating fixture 29 is comprised of a screw 291, a cover plate 292, two isolation rings 293, an isolating bushing 294, an inner cylinder 295, a fixture housing 296, and an attachment plate 299.

The arrangement of the isolating fixture 29 is described, from right to left in accordance with FIG 11: a cover plate 292 is attached to the inner cylinder 295 by a screw 291. The cover plate is removably attached to the first isolating ring 293 which makes contact with the outside edge of one side of the fixture housing 296. The other side's edge of the fixture housing 296 makes contact at the outside edge the second isolating ring 293. The, isolating ring 293, isolating bushing 294 and inner cylinder 295 are located inside the hollow fixture housing 296. An attachment plate 299 is fixedly connected to the front side of the inner cylinder 295.The isolating fixture 29 is fixedly attached to the foundation 19. It is fixedly connected to mounting base 25. This mounting base is secured to the foundation 30 by putting mounting bolts 23 through the mounting base.

At its most fundamental, the electromotor isolating mount 19 is a combination of the isolating fixture 29 and a supporting means. The supporting means holds the isolating fixture 29 in the desired spatial position. In the preferred embodiment of the present invention, this supporting means is a mounting base 25 that is bolted through the mounting platform 24 into a foundation 31 using mounting bolts 23. Another supporting means could be a set of struts or framework that holds the isolating fixture 29 in place. It may be possible to support the isolating mount 19 from above by placing it on a hanging platform.

The simplest version of the isolating fixture 19 is comprised of a cover plate 292 where the inner surface is in contact with the outer face the inner cylinder 295. The inner cylinder 295 is raised at both ends. Each of these ends is fixed connected inside of isolation rings 293. The surface between the raised edges of the inner cylinder 295 is inside a isolating bushing 293. The axial center of each component is in the same axial center line as the cover plate 292. This is sufficient to electrically isolate the electromotor 6 from the rest of the hybrid engine system. The preferred embodiment of the present invention is to use both the electromotor isolation mount 19 (in particular the isolating fixtures 29) and the elastic joint units 4 (and the elastic couplings 2) to electrically isolate the system. Preferably the isolating fixture 29 is connected to the mounting base 25. The mounting base 25 is held to the platform 24 through the use of mounting bolts 23, welding, or other suitable methods of joining two pieces of metal. However, how the isolating fixture is held in place is critical. One skilled in the art will know how to mount the isolating fixture 29 such that it will function correctly. In addition to electrically isolating the electromotor 6, the isolating fixture 29 also provides dampening of the movement and vibrations found in the system. Additionally, the inner cylinder 295 of the isolating fixture 29 will always return to its starting position. This is this occurs because of the elastic nature of the insolating ring and/or the isolating bushing. In such a manner, the electromotor 6 will always return to its starting position and is thus self centering. This is allows for very precise measurements of the defection from the starting position of the electromotor 6, adding to the other measurements used in the system that control the operating conditions of the shaft system 5.

The preferred embodiment of the present invention is to use an elastic insulation material for the isolating rings 293 and the isolating bushing 294. But it is possible for it to simply be an insulating material that is not elastic. This would be the case if the elastic joint units 4 are sufficient to reduce vibrations and movement alone. It would then be possible to use a material that was better insulating than an elastic insulating material. The insolating rings 293 and the isolating bushing 294 do not need to be made out of the same material. This can be adjusted depending on the specifications of the specific electromotor 6 and the overall system. The mounting platform 24 has been shown in the figures as only a little wider than the mounting base 25. However, it is possible to make this mounting plate 24 long enough so that two electromotor isolating mounts could fit on it. While shown as a flat plate, the attachment plate 299 need not be single flat plate. It could be divided into more than one section or have one or more holes cut into it. This could reduce weight and retain strength in the attachment plate 299. Additionally, the attachment plate 299 could have protrusions on it. These could help to increase the strength of the connection. The protrusion could be posts that enter corresponding holes in the electromotor housing 6A.
All of the figures show the large majority of the components of the electromotor isolating mount 19 are cylindrical, that is only a manufacturing convenience. It would be possible to make all or most of these components rectangular as well with no change in the concepts that have been presented.

The situation where the propulsion combustion engine 1 is idled to help the electromotor 6 turn a propeller that is at rest is given in the first two rows of FIG 2. This discloses that the idle speed of the propulsion combustion engine 1 is 650 RPM and that the electromotors RPM range is 650 - 2200 RPM. These are specific values from a wider range of possibilities. The idle speed of the propulsion combustion engine 1 can be between 500 and 1000 RPM. The RPM of the electro motor is from the idle speed to 2200.

## Claims

1. A hybrid propulsion system for a marine vessel, comprising in sequence a propulsion combustion engine (1), an electromotor (6) a following transmission unit (12) and an exit shaft (13) for a drive purpose, and where said electromotor (6) is connected to a chargeable accumulator unit (7), the described propulsion system comprises a shaft (5), which between the propulsion combustion engine (1) and the electromotor (6) and between the electromotor (6) and a transmission unit (12), is divided in several shaft parts (5B,5D) interconnected via one or more joint units (4), and that it is able to absorb vibrations, and individual axial and transverse movements of the individual shaft parts (5B-5D) in the main shaft (5),
**characterized in that**
the exit shaft part (5A) from the propulsion combustion engine (1), passes through a clutch unit (3) operating in a ratio of approximately 1:1,
at least one rotatable elastic joint units (4) is interconnected to the shaft parts (5B,5D) between said propulsion combustion engine (1) and electromotor (6) and the electromotor and the transmission (12) respectively; and where each of said at least one elastic joint unit (4) comprises universal mutually opposite joint flange structures which are mutually connected by a number of pivotable link arms (20), each arm (20) extending from a first flange structure (41) to the other flange structure (51) and is anchored in a pivotable manner to said respective flange structures to enable the joint units (4) to absorb vibrations in the hybrid propulsion system.

2. A hybrid propulsion system according to claim 1, **characterized in that** the first end of each link arm (20) is connected in a pivotable manner to an axial directed link bolt (axis) (22A) in a transverse surface of the first flange structure (41), the described axis being located at a distance from the main shaft (5) rotational axis, while the second end of each link arm (20) is connected in a pivotable manner to a radial directed link bolt axis (22B) on the second flange structure comprising the adjacent shaft part (5).

3. A hybrid propulsion system according to claims 1-2, **characterized in** two rotatable elastic joint units (4) are with mutually distance connected to the shaft (5B,5D) part between said propulsion combustion engine (1) and the electromotor (6), and between the electromotor (6) and the transmission (12) respectively.

4. A hybrid propulsion system according to claim 1, **characterized in that** the exit shaft (5A) of the propulsion combustion engine (1) and the electro motor (6) rotor shaft (5C) is of approximately the same diameter.

5. A hybrid propulsion system according to any of the preceding claims,
**characterized in that** each link bolt (22A, 22B) of the joints (4) includes flexible rubber bushings to prevent sparkovers onto the shaft extending upward and downwards of the electromotor (6) unit.

6. A hybrid propulsion system according to any of the preceding claims,
**characterized in that** each flexible flange structure comprises at least three link arms eaqually spaced around the transverse circumference of each flange structure interconnecting the two flange structures.

7. A hybrid propulsion system according to claim 1, **characterized in that** the exit shaft part (5A) from the propulsion combustion engine (1), passes through the clutch unit (3) via a flexible/elastic joint unit (2).

8. A hybrid propulsion system according to claim 7, **characterized in that** the clutch (3) is preferably an electromagnetically or hydraulically operating clutch (3), wherein a hydraulic clutch (3) solution rim includes an oil film, further the hydraulic clutch (3) system includes a separate oil cooling system.

9. A hybrid propulsion system according to any of the preceding claims,
**characterized in that** the electromotor (6) is designed to
act as a generator the shaft of which is rotated by the propulsion combustion engine (1) shaft to charge the battery package (7), or
to act as a motor powered by battery-electricity for giving rotational power to the shaft (5) which is either disconnected from the propulsion combustion engine shaft (5A), or is connected to the propulsion combustion engine shaft (5A) for a combined rotation of the propulsion unit (13), or
that the rotor shaft part (5C) may also only rotate together with the propulsion combustion engine shaft (5A), i.e. neither charging the accumulator package (7) nor being a motor rotated by the accumulator (7) electricity.

10. A hybrid propulsion system according to any of the preceding claims,
**characterized in that** the electromotor (6) is a permanent magnet synchronous motor/ generator or an asynchronous electro motor/ generator.

11. A hybrid propulsion system according to any of the preceding claims,
**characterized in that** the electromotor (6) mounting comprises an isolating fixture for electrical and vibrational protection that is comprised of: a cover plate (292) comprised of a front side and a back side; a first and second isolation ring (293) comprised of an inside and outside edge in the radial direction and a front and back face in the transverse direction; a hollow cylindrical isolating bushing (294) comprised of an inner and an outer surface in the radial direction and a front and back face in the transverse direction; an cylindrical inner cylinder (295) with a outer surface in the radial direction, and a front face and a back face on opposite ends of the inner cylinder (295); a hollow cylindrical fixture housing (296) with an inner surface and outer surface in the radial direction and a front a back face in the transverse direction; and **in that** the back side of the cover plate (292) is in contact with the front side of the first isolation ring (293); the back side of the first isolation ring (293) is in contact with the front face of the fixture housing (296); the front side of the second isolation ring (293) is in contract with the back face of the fixture housing (296); the outer surface of the isolation bushing (294) is in contact with the inner surface of the fixture housing (296); the inner surface of the isolation bushing (294) is in contact with the outer surface of the inner cylinder (295); the front face of the isolating bushing (294) is in contact with the back side of the cover plate (292); the front face of the inner cylinder (295) is in contact with the back side of the cover plate (295); and wherein all of these components are centered along the same axial as the inner cylinder (295).

12. Method for starting an exit shaft of a vessel from rest by an electromotor (6) by operating a hybrid propulsion system of the preceding claims 1-11, comprised of, in sequence a propulsion combustion engine (1), an electromotor (6) a following transmission unit (12) and an exit shaft (13) for a drive purpose, the described propulsion system comprises a common shaft (5), which is found between the propulsion combustion engine and the electromotor (6) and between the electromotor (6) and a transmission unit (12), is divided in several shaft parts (5B,5D) interconnected via one or more joint units (2, 4), and that it is able to absorb vibrations, and individual axial transverse movements of the individual shaft parts (5A-E) in the main shaft (5), **characterized by** being comprised of the following set of steps:
(1) disengaging the clutch unit (3);
(2) disengaging the transmission unit (12);
(3) starting the propulsion combustion engine (1);
(4) waiting until the propulsion combustion engine (1) has around 500 to 1000 RPMs;
(5) engaging the clutch unit (3);
(6) waiting until the electromotor (6) has between 500 and 1200 RPMs;
(7) engaging the transmission unit (12);
(8) disengaging the clutch unit (3);
(9) stopping the propulsion combustion engine (1);
(10) operating the vessel using only the electromotor (6).

13. Use of a hybrid propulsion system in accordance with any of claims 1 to 11
wherein adjacent to the electromotor (6) exit, sensors (9) for a torque meter (8) and a sensor (10) are arranged to measure the speed of the electromotor (6) shaft 5, in that the a main parts are connected via a control line (46) to start an exit shaft (13) of a vessel from rest with an electromotor (6).

14. Use according to claim 12 in that the torque meter (8) and sensors (9, 10) in
an hybrid motor system feed information to an operator or operating unit to operate the electro motor (6) to dampen unwanted vibrational frequencies.
